# EUROPÄISCHE PATENTSCHRIFT

(11) **EP 2 873 518 B1**
(45) Veröffentlichungstag und Bekanntmachung des Hinweises auf die Patenterteilung: **04.03.2020**
(21) Anmeldenummer: 14187989.0
(22) Anmeldetag: 07.10.2014
(51) Int. Cl.: B29C 70/86, B29C 70/88, B29C 70/02, B29C 70/22, B29L 31/30

(54) **Verfahren zum Herstellen eines verstärkten Faserverbundbauteils**
Method for producing a reinforced fibre composite component
Procédé de fabrication d'un composant en composite renforcé en fibres

(30) Priorität: 09.10.2013 DE 102013220337
(43) Veröffentlichungstag der Anmeldung: 20.05.2015
(73) Patentinhaber: Bayerische Motoren Werke Aktiengesellschaft, 80809 München (DE)
(72) Erfinder: Schnaufer, Thomas, 82386 Oberhausen (DE); Veihelmann, Bernd, 84034 Landshut (DE); Beil, Andreas, 80807 München (DE)

(56) Entgegenhaltungen:
- EP-A1- 2 525 964
- EP-A1- 2 613 925
- EP-A1- 2 636 517
- WO-A1-2006/118448

## Beschreibung

Die Erfindung betrifft ein Verfahren zum Herstellen eines verstärkten Faserverbundbauteils sowie ein verstärktes Faserverbundbauteil.

Faserverbundbauteile finden zunehmende Verwendung in Kraftfahrzeugen, da sie eine hohe Steifigkeit bei gleichzeitig geringem Gewicht im Vergleich zu entsprechenden Bauteilen aus rein metallischem Werkstoff aufweisen.

Um eine besonders hohe Formstabilität und gleichzeitig ein sehr geringes Gewicht zu erzielen, sind Faserverbundbauteile bekannt, die einen Stützkern umfassen, der mit einer Faserstruktur aus Kohle- oder Glasfasern durch Umwickeln oder Umflechten ummantelt ist. Es wird auf diese Weise eine hohlprofilförmige Faserstruktur bereitgestellt, deren Formstabilität durch den innerhalb des gebildeten Hohlprofils angeordneten Stützkern gestützt und somit gefestigt wird. Unter anderem finden Stützkerne aus Kunststoffschaum oder aus Metall Anwendung.

Aufgrund des Aufbaus des Bauteils werden der gesamte Stützkern bzw. die gesamte Ummantelung auf die auftretenden Belastungen ausgelegt, so dass das gesamte Bauteil einen einheitlichen Lagenaufbau aufweist und daher an minderbelasteter Stelle überdimensioniert ist.

Beispielsweise ist aus der EP 2 465 665 A1 ein materialhybrides Bauteil bekannt, das durch eine geflochtene Ummantelung eines metallischen Hohlprofils in vorteilhafter Weise verstärkt ist und somit eine hohe Formstabilität aufweist. Die Ummantelung ist aus einem mit Endlosfasern verstärkten Kunststoff gebildet.

Aus der EP 2 613 925 B1 ist ein Verfahren zur Herstellung eines Teils bekannt, umfassend die Schritte: Herstellen eines Dorns, Flechten eines Überzugs aus Fasern um den Dorn unter bester Anpassung an die Formen des Dorns, lokales Aufbringen auf den geflochtenen Überzug von mindestens einem Patch, Wiederholen der beiden Schritte des Flechtens und Aufbringens bis man einen Vorformling erhält, Flechten eines äußeren geflochtenen Überzugs, der die Einheit überdeckt, Einbringen von Harz in den Vorformling und Polymerisation des Harzes.

Aufgabe der Erfindung ist es, ein besonders stabiles und festes Faserverbundbauteil mit gleichzeitig möglichst geringem Gewicht vorzusehen.

Diese Aufgabe wird gelöst mittels eines Verfahrens gemäß Patentanspruch 1 sowie mit einem Faserverbundbauteil mit den Merkmalen des Patentanspruchs 5. Vorteilhafte Ausführungsformen ergeben sich aus den jeweils abhängigen Ansprüchen.

Demnach wird ein Verfahren zum Herstellen eines verstärkten Faserverbundbauteils gemäß Anspruch 1 vorgeschlagen.

Es wird also zunächst das Stützelement vorgesehen und auf einer seiner äußeren Oberflächen eine oder mehrere Verstärkungslagen angeordnet. Das Anordnen der Verstärkungslagen kann beispielsweise durch flächiges Auflegen, Aufkleben oder Anheften auf die äußere Oberfläche erfolgen. Es versteht sich, dass ebenso Verstärkungslagen auf weiteren Oberflächen, sowohl inneren als auch äußeren Oberflächen, vorgesehen werden können.

So ist es beispielsweise möglich, dass die mindestens eine Verstärkungslage lokal in mindestens einem definierten Abschnitt der äußeren Oberfläche des Stützelements angeordnet wird.

Die Verstärkungslage bietet in jedem Fall die Möglichkeit, die Anordnung aus Stützelement und Ummantelung zumindest lokal zu verstärken und somit eine lokale Verformung oder ein lokales Brechen des Faserverbundbauteils zu verhindern. Es werden also dank der Verstärkungslage die mechanischen Eigenschaften des Faserverbundbauteils insbesondere für den Lastfall einer Biegung an den verstärkten Stellen deutlich verbessert. Vorzugsweise werden die Verstärkungslagen daher im Bereich hochbelasteter Stellen angeordnet.

Auf diese Weise wird lokal eine Bruchdehnung erhöht, wodurch ein komplettes Reißen des Bauteils vermieden werden kann, falls die Ummantelung reißen sollte. Dies bietet den weiteren Vorteil, dass eine Verletzungsgefahr, beispielsweise für Insassen eines mit einem entsprechenden Faserverbundbauteil ausgestatteten Fahrzeugs, verringert wird, da mangels eines vollständigen Durchbruchs keine offenen Bruchstellen nach einer Verformung des Bauteils entstehen.

Aufgrund der gemeinsamen Ummantelung von Stützelement und Verstärkungslage(n) sind die eine oder die mehreren Verstärkungslagen innerhalb des Faserverbundbauteils integriert, ohne nach außen hervorzutreten. Vielmehr wird eine Außenansicht weiterhin durch die Ummantelung definiert. Mit anderen Worten dargestellt, wird ein Lagenaufbau an der verstärkten Stelle geschaffen, der ausgehend von dem Stützelement auf dessen äußerer Oberfläche angeordnete Verstärkungslage und auf dieser die Ummantelung aufweist. Die Ummantelung umschließt somit die Verstärkungslage und das Stützelement gemeinsam, so dass die Verstärkungslage zwischen Stützelement und Ummantelung angeordnet ist.

In Bereichen ohne Verstärkung umfasst der Lagenaufbau dagegen lediglich das Stützelement und die das Stützelement umgebende Ummantelung, ohne eine dazwischen angeordnete Verstärkungslage.

Der Schritt des Imprägnierens mit einer Matrix kann mittels bekannter Imprägnierverfahren erfolgen, die bereits bekannt sind, so dass auf eine Beschreibung verzichtet werden kann. Es ist möglich, lediglich die Ummantelung oder die Ummantelung und die Verstärkungslage gemeinsam oder das gesamte umwickelte Stützelement vollständig mit der Matrix zu tränken.

Vorzugsweise kann die mindestens eine Verstärkungslage Aramidfasern, Glasfasern und/oder Naturfasern umfassen. Die Verstärkungslagen sind als sogenannte "Patches", also als lokal aufgebrachte Faserhalbzeuge, insbesondere Matten, Gelege, Gewebe oder Gestricke, ausgestaltet.

Des Weiteren kann die Ummantelung Endlosfasern aus Glasfasern, Aramidfasern und/oder Kohlefasern umfassen. Die Ummantelung ist als Faserstruktur zu verstehen, die insbesondere durch Umflechten erzeugt und mit einer Matrix imprägniert wird. Besonders bevorzugt können die Materialien der Endlosfasern beliebig mit den genannten Materialien der Verstärkungslage kombiniert werden. Ein besonderer Stabilitätszugewinn wird durch Verwendung von Aramidfasern oder Glasfasern für die Verstärkungslage erzielt, wenn gleichzeitig die Ummantelung lediglich aus Kohlefasern gebildet wird, da die Kohlefasern eine vergleichsweise geringe Bruchdehnung aufweisen und bei größerer Verformung reißen können. In diesem Fall reduzieren die Verstärkungsfasern die Belastung der Ummantelung oder stellen zumindest eine Restfestigkeit für den Fall des Versagens der Ummantelung aus Kohlefasern bereit.

Die Matrix kann insbesondere Kunststoff oder Harz umfassen, das durch den Schritt des Imprägnierens zumindest in die Faserstruktur der Ummantelung, oder zusätzlich in die Verstärkungslage und/oder das Stützelement eingebracht und ausgehärtet wird.

Das Stützelement ist als Stützkern ausgebildet und es kann ein Holz-, Metall-, und/oder Kunststoffmaterial, insbesondere ein Schaummaterial aus Metall oder Kunststoff, umfassen.

Des Weiteren wird ein verstärktes Faserverbundbauteil mit mindestens einem Stützelement vorgeschlagen, das mit einer eine Faserstruktur umfassenden Ummantelung umflochten ist, wobei auf mindestens einer äußeren Oberfläche des Stützelements eine zumindest lokale Verstärkungslage zwischen dem Stützelement und der Ummantelung angeordnet ist.

Vorzugsweise ist das Faserverbundbauteil mit einem Verfahren gemäß der Beschreibung hergestellt.

Gemäß einer Ausführungsform ist das Faserverbundbauteil ein faserverstärktes Karosseriestrukturbauteil oder ein Verstärkungsbauteil eines Kraftfahrzeugs. Zum Beispiel kann das Karosseriestrukturbauteil eine Karosseriesäule, insbesondere A-, B-, C- oder D-Säule, ein Spriegel, Schweller, Motorträger, Längsträger, Querträger, Seitenrahmen oder dergleichen sein. Ebenso kann das Faserverbundbauteil als ein Verstärkungsbauteil ausgeführt sein, das mit einem Karosseriestrukturbauteil verbindbar ist, wie beispielsweise eine Karosseriesäulen-Verstärkung, insbesondere eine A-, B- oder C-Säulen-Verstärkung, die zwischen einen äußeren und einen inneren Seitenrahmen eingesetzt wird.

Die Erfindung wird nachfolgend anhand eines Ausführungsbeispiels mit Bezugnahme auf die Figuren näher beschrieben.
Fig.1 zeigt ein verstärktes Verstärkungsbauteil für eine A-Säule in einer perspektivischen Ansicht gemäß der Beschreibung, und
Fig. 2 zeigt das verstärkte Verstärkungsbauteil aus Fig. 1 in geschnittener perspektivischen Ansicht.

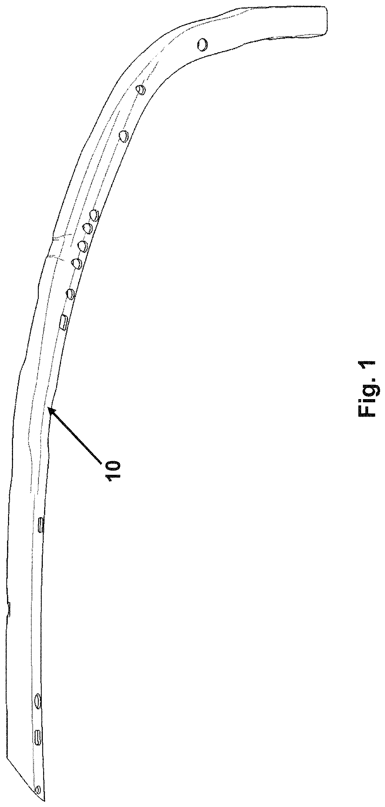

In Fig. 1 ist in teilweiser Darstellung ein als verstärktes Faserverbundbauteil 10 ausgestaltetes Karosseriestrukturbauteil eines Fahrzeugs in Form eines verstärkten Verstärkungsbauteils für eine A-Säule dargestellt. Dieses wird üblicherweise zwischen einem äußeren Seitenrahmen und einem inneren Seitenrahmen des Kraftfahrzeugs angeordnet.

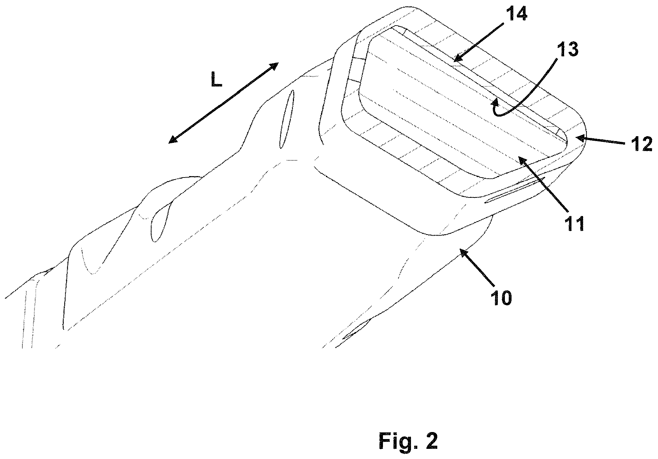

Aus dem in Fig. 2 dargestellten Schnitt des verstärkten Faserverbundbauteils 10 ist erkennbar, dass das Faserverbundbauteil 10 ein Stützelement 11 umfasst, das mit einer eine Faserstruktur umfassenden Ummantelung 12 umflochten ist. Auf mindestens einer äußeren Oberfläche 13 des Stützelements 11 ist eine lokale Verstärkungslage 14 zwischen dem Stützelement 11 und der Ummantelung 12 angeordnet.

Das Stützelement 11 ist als Stützkern, beispielsweise aus Kunststoffschaum, ausgebildet und weist einen in einer Längsrichtung L erstreckten Körper auf, der in einer Umfangsrichtung die umlaufende äußere Oberfläche 13, also die Mantelfläche, aufweist.

Die Verstärkungslage 14 ist lokal in einem definierten Abschnitt der äußeren Oberfläche 13 des Stützelements 11 angeordnet und gemeinsam mit dem Stützelement 11 von der Ummantelung 12 mit Endlosfasern umflochten. Das Anordnen der Verstärkungslage 14 erfolgt durch flächiges Auflegen, Aufkleben oder Anheften auf die äußere Oberfläche 13. Es kann somit eine lokale Verformung oder ein lokales Brechen des Faserverbundbauteils 10 verhindert werden, indem dank der Verstärkungslage 14 die mechanischen Eigenschaften des Faserverbundbauteils 10 insbesondere für den Lastfall einer Biegung an den verstärkten Stellen deutlich verbessert werden. Vorzugsweise wird die Verstärkungslage 14 daher im Bereich hochbelasteter Stellen angeordnet.

Des Weiteren ist die Ummantelung 12 mit einer Matrix imprägniert und ausgehärtet.

## Patentansprüche

1. Verfahren zum Herstellen eines verstärkten Faserverbundbauteils mit mindestens einem Stützelement, das mit einer eine Faserstruktur umfassenden Ummantelung umflochten ist, mit den folgenden Schritten:
a. Bereitstellen des Stützelements (11), wobei das Stützelement (11) als Stützkern ausgebildet ist,
b. Anordnen mindestens einer Verstärkungslage (14) auf einer äußeren Oberfläche (13) des Stützelements (11), wobei die Verstärkungslage (14) als Patch lokal ausgestaltet ist und das Anordnen der mindestens einen Verstärkungslage (14) durch flächiges Auflegen, Aufkleben oder Anheften auf die äußere Oberfläche (13) erfolgt,
c. Erzeugen der gemeinsamen Ummantelung (12) des Stützelements (11) und der Verstärkungslage (14) mittels Umflechten mit Endlosfasern, wobei die zumindest lokale Verstärkungslage (14) zwischen dem Stützelement (11) und der Ummantelung (12) angeordnet ist, und
d. Imprägnieren des umflochtenen Stützelements (11) mit einer Matrix.

2. Verfahren nach Anspruch 1, wobei die Verstärkungslage (14) Aramidfasern, Glasfasern und/oder Naturfasern umfasst.

3. Verfahren nach Anspruch 1 oder 2, wobei die Ummantelung (12) Endlosfasern aus Glasfasern, Aramidfasern und/oder Kohlefasern umfasst.

4. Verfahren nach einem der Ansprüche 1 bis 3, wobei die Verstärkungslage (14) lokal in mindestens einem definierten Abschnitt der äußeren Oberfläche (13) des Stützelements (11) angeordnet wird.

5. Verstärktes Faserverbundbauteil mit einem Stützelement, das mit einer eine Faserstruktur umfassenden Ummantelung (12) umflochten ist, wobei auf mindestens einer äußeren Oberfläche (13) des Stützelements (11) eine zumindest lokale Verstärkungslage (14) zwischen dem Stützelement (11) und der Ummantelung (12) angeordnet ist, wobei das Stützelement (11) als Stützkern ausgebildet ist und die Verstärkungslage (14) als Patch ausgestaltet und durch flächiges Auflegen, Aufkleben oder Anheften auf der äußeren Oberfläche (13) des Stützelements (11) angeordnet ist.

6. Verstärktes Faserverbundbauteil nach Anspruch 5, **dadurch gekennzeichnet, dass** das Faserverbundbauteil (10) mit einem Verfahren nach einem der Ansprüche 1 bis 4 hergestellt ist.

7. Verstärktes Faserverbundbauteil nach Anspruch 5 oder 6, **dadurch gekennzeichnet, dass** das Faserverbundbauteil (10) ein faserverstärktes Karosseriestrukturbauteil oder ein Verstärkungsbauteil eines Kraftfahrzeugs ist.

## Claims

1. A method for producing a reinforced fibre composite component with at least one supporting element which is braided with a sheathing comprising a fibre structure, having the following steps:
a. providing the supporting element (11), wherein the supporting element (11) is designed as a supporting core,
b. arranging at least one reinforcing layer (14) on an outer surface (13) of the supporting element (11), wherein the reinforcing layer (14) is locally configured as a patch and the arranging of the at least one reinforcing layer (14) takes place by flat laying, gluing or affixing on the outer surface (13),
c. producing the common sheathing (12) of the supporting element (11) and of the reinforcing layer (14) by means of braiding with continuous filaments, wherein the at least local reinforcing layer (14) is arranged between the supporting element (11) and the sheathing (12), and
d. impregnating the braided supporting element (11) with a matrix.

2. A method according to Claim 1, wherein the reinforcing layer (14) comprises aramid fibres, glass fibres and/or natural fibres.

3. A method according to Claim 1 or Claim 2, wherein the sheathing (12) comprises continuous filaments made of glass fibres, aramid fibres and/or carbon fibres.

4. A method according to one of Claims 1 to 3, wherein the reinforcing layer (14) is locally arranged in at least one defined portion of the outer surface (13) of the supporting element (11).

5. A reinforced fibre composite component with a supporting element which is braided with a sheathing (12) comprising a fibre structure, wherein an at least local reinforcing layer (14) is arranged between the supporting element (11) and the sheathing (12) on at least one outer surface (13) of the supporting element (11), wherein the supporting element (11) is designed as a supporting core and the reinforcing layer (14) is configured as a patch and is arranged on the outer surface (13) of the supporting element (11) by flat laying, gluing or affixing.

6. A reinforced fibre composite component according to Claim 5, **characterised in that** the fibre composite component (10) is produced with a method according to one of Claims 1 to 4.

7. A reinforced fibre composite component according to Claim 5 or Claim 6, **characterised in that** the fibre composite component (10) is a fibre-reinforced body structural component or a reinforcing component of a motor vehicle.

## Revendications

1. Procédé de fabrication d'un élément composite renforcé par des fibres comportant au moins un élément d'appui qui est entouré par une enveloppe tressée ayant une structure de fibres comprenant les étapes suivantes consistant à :
a. se procurer l'élément d'appui (11), cet élément d'appui (11) étant réalisé sous la forme d'un noyau d'appui,
b. positionner en place au moins une couche de renfort (14) sur une surface externe (13) de l'élément d'appui (11), cette couche de renfort (14) étant conformée localement sous la forme d'un patch, et le positionnement de la couche de renfort (14) étant effectué par application à plat, collage ou adhésion sur la surface externe (13),
c. obtenir l'enveloppe commune (12) de l'élément d'appui (11) et de la couche de renfort (14) en les entourant d'une tresse de fibres sans fin, la couche de renfort au moins locale (14) étant située entre l'élément d'appui (11) et l'enveloppe (12), et
d. imprégner l'élément d'appui (11) entouré d'une tresse avec une matrice.

2. Procédé conforme à la revendication 1,
selon lequel la couche de renfort (14) renferme des fibres d'aramide, des fibres de verre et/ou des fibres naturelles.

3. Procédé conforme à la revendication 1 ou 2,
selon lequel l'enveloppe (12) renferme des fibres sans fin constituées par des fibres de verre, des fibres d'aramide et/ou des fibres de carbone.

4. Procédé conforme à l'une des revendications 1 à 3,
selon lequel la couche de renfort (14) est positionnée localement sur au moins un segment défini de la surface externe (13) de l'élément d'appui (11).

5. Elément composite renforcé par des fibres comprenant un élément d'appui qui est entouré par une enveloppe tressée (12) ayant une structure de fibres dans lequel sur au moins une surface externe (13) de l'élément d'appui (11) est positionnée une couche de renfort au moins locale (14) entre l'élément d'appui (11) et l'enveloppe (12), l'élément d'appui (11) étant réalisé sous la forme d'un noyau d'appui et la couche de renfort (14) étant réalisée sous la forme d'un patch et étant positionnée sur la surface externe (13) de l'élément d'appui (11) par application à plat, collage et/ou adhésion.

6. Elément composite renforcé par des fibres conforme à la revendication 5,
**caractérisé en ce qu'**
il est obtenu par la mise en œuvre d'un procédé conforme à l'une des revendications 1 à 4.

7. Elément composite renforcé par des fibres conforme à la revendication 5 ou 6,
**caractérisé en ce qu'**
il est constitué par un composant de structure de carrosserie renforcé par des fibres ou par un composant de renfort d'un véhicule.
